(19) Europäisches Patentamt
European Patent Office
Office européen des brevets

(11) **EP 2 035 689 B1**

(12) **EUROPÄISCHE PATENTSCHRIFT**

(45) Veröffentlichungstag und Bekanntmachung des Hinweises auf die Patenterteilung:
**21.09.2011 Patentblatt 2011/38**

(21) Anmeldenummer: **07726029.7**

(22) Anmeldetag: **14.06.2007**

(51) Int Cl.:
*F03B 1/04* *(2006.01)*    *F03B 11/08* *(2006.01)*

(86) Internationale Anmeldenummer:
**PCT/EP2007/005265**

(87) Internationale Veröffentlichungsnummer:
**WO 2008/003390 (10.01.2008 Gazette 2008/02)**

(54) **PELTONTURBINE MIT EINEM ZULAUFSYSTEM**

PELTON TURBINE WITH A SUPPLY SYSTEM

TURBINE PELTON MUNIE D'UN SYSTÈME D'ALIMENTATION

(84) Benannte Vertragsstaaten:
**AT CH DE ES FR IT LI**

(30) Priorität: **03.07.2006 DE 202006010272 U**

(43) Veröffentlichungstag der Anmeldung:
**18.03.2009 Patentblatt 2009/12**

(73) Patentinhaber: **Erlach Consult Jec**
**88213 Ravensburg (DE)**

(72) Erfinder:
• **ERLACH, Josef**
**88213 Ravensburg (DE)**

• **STAUBLI, Thomas**
**6048 Horw (CH)**

(74) Vertreter: **Manitz, Finsterwald & Partner GbR**
**Martin-Greif-Strasse 1**
**80336 München (DE)**

(56) Entgegenhaltungen:
**DE-C- 326 404    JP-A- 5 005 478**
**JP-A- 8 218 999    US-A- 1 327 953**

## Beschreibung

Die Erfindung handelt von einer Peltonturbine mit einem Zulaufsystem für drei bis sechs Düsen, welches ein Druckrohr mit einem Verteilelement aufweist, von welchem Zulaufleitungen zu den einzelnen Düsen abzweigen, welche mit einem Freistrahl auf die Becher eines Laufrades spritzen.

Bei mehrdüsigen horizontalen Peltonturbinen war bisher die Wasserabfuhr ein Problem. In der Patentanmeldung PCT/EP2005/012783 sind Lösungen für die Wasserabfuhr aufgezeigt, die auch für drei bis sechs Düsen einer horizontalen Anordnung der Turbinenachse ausreichend sind. Die Ausnutzung des Laufrades mit drei bis sechs Düsen ist natürlich wesentlich günstiger, da das Laufrad bei gleicher Leistung kleiner ausfällt. Mehr Düsen bedeuten aber auch Mehrkosten für Düsen, Zulaufleitungen und Verteilelemente. Die japanische Patentschrift JP 8218999 zeigt diese Problematik für horizontale Peltonturbinen mit zwei bis vier Düsen auf.

Der Übergang aus einem Druckrohr in ein Verteilelement und in drei und mehr Zulaufleitungen setzte bisher bei vertikaler Bauart aufwändige Spiralkonstruktionen aus gebogenen und geschweißten Mantelstücken voraus, um eine schonende und möglichst drallfreie Beschleunigung bis in den Freistrahl zu erreichen.

In der Patentschrift DE 326404 wird eine vertikale Freistrahlturbine gezeigt. Ein Verteilelement in Form eines hohlen Torus wird an der Peripherie in Achsrichtung von einem Druckrohr angespeist, wobei die Strömung mit einem 90° Knick in den Torus eintritt. Im freien Innenraum des Torus sind Laufradwelle und Lager der Turbine untergebracht. Vier Verteilrohre zweigen in radialer Richtung nach Außen aus dem Torus ab und führen jeweils mit zwei 90°-Krümmern zu den zugehörigen Düsen in der Horizontalen. An den Verteilrohren ist gleichzeitig die Auflage für das Rohrsystem und die Mechanik, welche simultan über Kettenantrieb die Düsen verstellt, angebracht. Zweck dieser Anordnung ist die zentrale Einlagerung und Befestigung der Turbinenwellenlager, sowie die Aufnahme der zum Laufrad erzeugten Tangentialkräfte an den Stützsäulen der Verteilrohre Diese mechanischen Vorteile führen zu einer ungünstigen, verlustbehafteten Strömungsführung, da der Eintritt in den Torus zunächst mit einer 90°-Krümmung aus dem Druckrohr radial nach Innen erfolgt, während die unmittelbar benachbarten Verteilrohre im spitzen Winkel dazu radial nach Außen abgehen.

Eine horizontale dreidüsige Anlage der damaligen Firma Sulzer Escherwyss (Ravensburg, Deutschland) steht beispielsweise in Costa Rica mit dem Anlagenamen "Don Pedro". Eine horizontale zweidüsige Anlage der Firma Voith AG (Heidenheim, Deutschland) steht beispielsweise im Kaunertal in Tirol, Österreich mit dem Anlagenamen "Prutz". Größere Düsenzahlen sind für horizontale Anlagen im Leistungsbereich über 100 KW eher nicht üblich. Bei vertikaler Bauart beispielsweise für sechsdüsige Anlagen wie sie von der Firma Voith AG gebaut werden oder von der Firma Fuji Electric Co LTD in der japanischen Patentschrift JP 5005478 gezeigt sind, gehen die Zulaufrohre von einem spiralförmigen, sich verjüngenden Verteilrohr weg.

Aufgabe der vorliegenden Erfindung ist es, ein kostengünstiges Zulaufsystem für Peltonturbinen mit drei bis sechs Düsen zu schaffen. Dies wird mit den kennzeichnenden Merkmalen des unabhängigen Anspruchs 1 erreicht.

Die erfindungsgemäße Anordnung hat den Vorteil, dass die Strömung zu jeder der drei oder mehr Düsen gleich ist, wenn alle Düsen in Betrieb sind, und dass das Schließen einer Düse die Strömung in den anderen Düsen nur unwesentlich beeinflusst. Ein weiterer Vorteil liegt darin, dass praktisch alle Teile des zentralen Verteilrohrs und der Zulaufleitungen aus Standardteilen, wie sie im Rohrleitungsbau und Kesselbau üblich sind, zusammenstellbar sind. Im Gegensatz zu einem Verteilelement in Form einer außen liegenden Spirale entstehen Gewichtsersparnisse und eine erhebliche Reduktion der Schweißnahtlänge im Zulaufsystem. Die abhängigen Ansprüche 2 bis 21 stellen vorteilhafte Weiterbildungen der Erfindung dar.

Eine konische Erweiterung des Verteilrohrs bringt eine Verzögerung der Strömung, die verhindert, dass beim Einlauf in die Zulaufleitungen höhere Geschwindigkeiten als beispielsweise in der Druckleitung auftreten. Gleichzeitig findet in diesem langsameren Strömungsbereich ein verlustarmer Abgleich der Strömung statt, wenn einzelne Düsen geschlossen sind.

Wenn die Achse des zentralen Verteilrohrs mit der Laufradachse zusammenfällt und die Zulaufleitungen derart symmetrisch zur Achse des Verteilrohrs angeordnet sind, dass sie durch Drehung um diese Achse auseinander hervorgehen, dann sind an den Düsen identische Strömungsverhältnisse erreichbar. Gleichzeitig entstehen entsprechend der Anzahl Düsen identische Zulaufleitungen, was die Fertigung vereinfacht.

Ein weiterer großer Vorteil ergibt sich bei Anpassung an verschiedene Fallhöhen und Drehzahlen wie bei Umbauten bei Vergrößerung der Fallhöhe, was oft schon bei eingeplanten Leistungssteigerung angewendet wird, indem man die Wasserfassung an einen geodätisch höher liegenden Ort verlegt. In einem solchen Fall wird der Laufraddurchmesser und eventuell die Drehzahl verändert. Bei herkömmlichen mehrdüsigen Anlagen hat dies die vollständige Erneuerung der Verteilleitung und der davon abgehenden Zuleitungen bis an die Düsen zur Folge, während bei dem erfindungsgemäßen System das Zentrale Verteilrohr unverändert bleibt und lediglich die Zuleitungen geringfügig in ihrem Tangentenwinkel in der Laufradebene und in der Laufradebene in ihrer Länge korrigiert werden, damit die Düsen in die vorgeschriebene Lage zum neuen Laufrad kommen.

Für Peltonturbinen, bei denen die Düsen gleichmäßig über den Umfang des Laufrades verteilt sind, ergibt sich auch eine gleichmäßige Verteilung der Zulaufleitungen an dem zentralen Verteilrohr, sei es dass sie durch den Abschlussboden oder durch die Mantelfläche des zentralen Verteilrohrs geführt sind. Dies führt zu einer besonders günstigen Ausnutzung des inneren Querschnitts des zentralen Verteilrohrs.

Eine weitere strömungsmäßige Verbesserung ergibt sich, wenn die Zulaufleitungen in Form eines Rohrbogens in die Strömung des zentralen Verteilrohrs hineinragen. Die Umlenkung von der Achse des Verteilrohrs weg findet dann schon im Rohrbogen bei beschleunigter Strömung statt.

Diese Umlenkung wird durch Öffnungen zum Beispiel in Form von Querschlitzen am Einlauf dieser Rohrbögen unterstützt. Da die Zulaufrohre wegen der hohen Drücke bei Peltonturbinen eine relativ große Mindestwandstärke S aufweisen müssen, kann die Form der Öffnungen oder Schlitze am Eintritt der Rohrbogen gleichzeitig zur Strömungsführung der sie durchströmenden Wassermengen verwendet werden. Die nachfolgenden Maßnahmen wurden ganz allgemein in Versuchen als wesentliche Maßnahmen zur "Auffütterung" einer Grenzschicht in einem in ein Verteilrohr mit einem Vorsprung hineinragendes Rohr oder Rohrbogen festgestellt. Sie führen zur Verringerung der Einlaufverluste und zur Vermeidung eines Einlaufdralls, der sich bis in den Freistrahl fortsetzen könnte:

-   die Einlaufkante sollte zur Innenseite hin eine Neigung aufweisen

-   die Öffnungen oder Schlitze sollten ebenfalls eine Neigung um einen Winkel β von 30° bis 60° zur Mantellinie der Zulieferleitung in Längsrichtung aufweisen

-   die Öffnungen oder Schlitze sollten jeweils in einer Reihe auf einer Umfangslinie liegen und dort zwischen 60 bis 80% des Umfangs einnehmen

-   es können zwei und mehr Reihen in Strömungsrichtung nahe hintereinander liegen

-   die Breite B der Schlitze oder Öffnungen, quer zur Neigung gemessen, sollte zwischen 20% und 60% der Rohrwandstärke S betragen, vorzugsweise 40%

-   bei Schlitzen ist längs des Umfangs eine Länge L von der zehnfachen bis zwanzigfachen Breite B sinnvoll

-   der Abstand A zwischen den Öffnungen von benachbarten Reihen sollte in etwa der Wandstärke S entsprechen

-   die Wände zwischen den Öffnungen oder Querschlitzen von benachbarten Reihen sollten auf der Einlaufseite eine symmetrische Anschärfung bezüglich ihrer Neigung aufweisen.

Der Widerstandsbeiwert ζ (zeta) für den Einlauf wird so erheblich günstiger (beispielsweise ζ = 0,25 bei einem Rohrdurchmesser von 140 mm, einer Wandstärke S von 5 mm, bei drei Reihen mit Querschlitzen und einer mittleren Wassergeschwindigkeit von 3,5 m/s; mit einer zusätzlichen Verrundung/Anschäriüng der Eintrittskanten an den Schlitzen wird ζ = 0,2 erreicht; ohne Maßnahmen beträgt ζ = 0,6).

Diese Resultate gelten ganz allgemein, das heißt auch für gerade Ausflussrohre aus einem Verteilrohr, wenn sie mit einem Vorsprung in einem Abstand a, welcher mindestens 20% des Robrdurchmessers d der Zulaufleitung entspricht, in das Verteilrohr hinein stehen und die hier aufgeführten Maßnahmen aufweisen.

Dadurch dass die Zulaufleitungen beim Durchbruch durch die Außenkontur des zentralen Verteilrohrs bereits einen Winkel 20° < α < 70° mit der Achse des zentralen Verteilrohrs bilden, können die Zulaufleitungen ohne große Umwege auf einen größeren Abstand b zu der Laufradachse gebracht werden und in einem Düsenkrümmer mit beschleunigter Strömung in die Laufradebene führen, wobei die Summe der Umlenkungen außerhalb des zentralen Verteilrohrs einem Winkel von deutlich weniger als 180° entspricht.

Die Anordnung mit gleichmäßig über den Umfang des Verteilrohrs angebrachten Zulaufleitungen und mit in das Verteilrohr eintauchenden Rohrkrümmern hat für drei- bis sechsdüsige Anlagen eine besonders gute Ausnützung des Querschnitts des Verteilrohres auf der Höhe des Einlaufs in die Rohrkrümmer zur Folge. Oder anders ausgedrückt: Das Verteilrohr muss am Eintritt in die Zulaufrohre nur etwa einen um einen Faktor 1,25 größeren Durchmesser als die Druckleitung haben, wenn die mittleren Geschwindigkeiten in Zulaufleitungen und Druckleitung gleich groß sind Wenn man der Einfachheit halber annimmt, dass es sich um Kreise handelt, die sich auf der Höhe des Einlaufs in die Rohrbogen berühren, und dem Verteilrohr einen Radius $R_2$, der Druckleitung einen Radius $R_1$ und den Zulaufleitungen einen Radius r zuordnet, dann ergeben sich bei n Zulaufleitungen folgende allgemeine Zusammenhänge

$$r = \frac{R1}{\sqrt{n}} \quad \text{und} \quad \frac{r}{R2-r} = \cos(90° - 360°/2n)$$

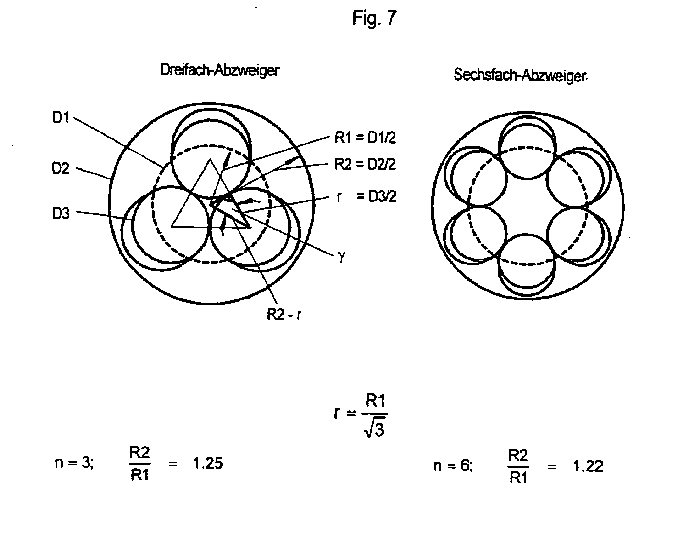

welche in Figur 7 für die Geometrie bei drei Zulaufleitungen dargestellt sind. Löst man diese Beziehungen nach $R_2$ auf, dann ergibt sich folgende Tabelle:

| n= | 2 | 3 | 4 | 5 | 6 | 7 |
|---|---|---|---|---|---|---|
| $R_2/R_1$ = | 1,414 | **1,244** | **1,207** | **1,208** | **1,224** | 1,249 |

Um noch genügend Platz zum Einschweißen der Rohrbögen in den Abschlussboden ist ein Zuschlag von 10-40 % zum Durchmesser der Mantelfläche erforderlich.

Drei bis sechs Zulaufleitungen ergeben eine optimale Ausnutzung des Verteilrohrs. Bei sieben Zulaufleitungen wäre die Ausnutzung $R_2/R_1$ auch noch gut, wenn es die Strömungsverhältnisse am Laufrad zulassen. Bei zwei Zulaufleitungen ist die Ausnutzung schlecht.

Dass ein kurzes Verteilrohr aus Standardelementen und bei Düsenzahlen von drei bis sechs Düsen vorteilhafte Lösungen mit wachsender Düsenzahl für die Gewichtsersparnis an den Zulaufrohren ergeben, zeigt die nachfolgende Tabelle. Bei gleicher Linienführung ergibt sich beim Übergang von zwei auf sechs Zulaufleitungen ein Durchmesserverhältnis von 81/47, welches quadratisch die Mindestwandstärke beeinflusst und zu einer Materialeinsparung von etwa 30-40% führt.

| n = | 2 | 3 | 4 | 5 | 6 | 7 |
|---|---|---|---|---|---|---|
| ruckrohr D1= | 100 | 100 | 100 | 100 | 100 | 100 |
| Verteilrohr D2= | 196 | 171 | 163 | 160 | 160 | 161 |
| Zulaufrohr D3= | 81 | 66 | 57 | 51 | 47 | 43 |

Anlagen mit sechs Düsen können gemäß PCT/EP2005/012783 vertikal und neu auch horizontal ohne Einbussen eingesetzt werden. Die Vorteile für ein daraus resultierendes kleines Laufrad mit kleinem Generator, das unter Umständen auch fliegend auf der Generatorwelle montiert sein kann, werden durch die vorliegende Anmeldung mit einem kostengünstigen Zulaufsystem unterstützt. Für die möglichen Einsparungen an Düsen und zugehörigen Absperrorganen in mehrdüsigen Anlagen liegt eine Parallelanmeldung vor, sodass mit diesen drei Erfindungen ein Konzept für kostengünstige Kompaktanlagen gegeben ist. Für kleinere Anlagen, wie sie beispielsweise für "Insellösungen" der Stromversorgung in Bergdörfern notwendig sind, ist es möglich Generator, Peltonturbine und Zulaufsystem auf einem einzigen Grundrahmen zu montieren. Somit sind kompakte Einheiten bis 3 MW in einem Container unterzubringen ("Container sized System") und direkt an den Bestimmungsort zu transportieren, aufzubauen und in Betrieb zu setzen.

Gelegentlich kommen Sand und kleine Steine in Druckrohrleitungen und Verteilleitungen und beschädigen und erodieren die nachfolgenden Teile wie Düsenmundstück, Düsennadel oder Laufradbecher. Wegen des größeren spezifischen Gewichts gegenüber Wasser werden die Sandpartikel im Bodenbereich von Rohrleitungen und bei größeren Geschwindigkeiten in den Außenbahnen von Krümmungen mitgeschleppt. Die Erfahrung zeigt, dass bei herkömmlichen Peltonturbinen ohne Sandabscheider der Sand bei

- eindüsigen Turbinen direkt in die Düse
- zwei- und dreidüsigen horizontalen Turbinen mit Anströmung von oben vorwiegend in die erste Düse
- zwei -und dreidüsigen horizontalen Turbinen mit Anströmung von unten vorwiegend in die letzte Düse und bei
- drei- bis sechsdüsigen vertikalen Turbinen vorwiegend in die letzte Düse gelangt.

Bei der vorliegenden Erfindung ist es daher für horizontale Turbinen von Vorteil, am Ende der konischen Erweiterung des Verteilrohrs, welche die Strömung verzögert und ein Absinken des Sandes zum Boden hin fördert, einen Sandabscheider anzubringen. Dieser kann beispielsweise aus einem eingeschweißten Blindrohr bestehen, an dessen Ende eine Spüleinrichtung in Form eines Kugelhahns angebracht ist. Durch sporadisches Öffnen des Kugelhahns lässt sich der Sand zusammen mit Wasser abführen. Ein Rechen, der auf der Höhe der Mantelfläche der konischen Erweiterung eingeschweißt ist, unterstützt die Abscheidung von Sand, indem er die Bildung eines Wirbels in dem Blindrohr unterdrückt, da er in jedem seiner quer zur Strömung liegenden Schlitze einen annähernd gleichen Staudruck aufweist. Gleichzeitig bildet er eine mechanische Verstärkung in der unterbrochenen Mantelfläche der konischen Erweiterung.

Eine weitere Verbesserung für eine Peltonturbine mit dem bisher beschriebenen Zulaufsystem ergibt sich, wenn die starr mit den Zulaufleitungen verbundenen Düsen durch lösbare Gelenkverbindungen in der Laufradebene in einem kleinen Winkelbereich von maximal 8° verstellbar sind, um den Strahlkreisdurchmesser $d_1$ der auf den Bechern auftreffenden Freistrahlen geringfügig zu verändern. Normalerweise genügt eine Verstellung von plus/minus 2°, um die saisonbedingten Abweichungen in der Fallhöhe H von einer optimalen Fallhöhe H durch eine mit dieser Verstellung bewirkte horizontale Verschiebung der WirkungsgradKennlinie so zu kompensieren, dass die saisonbedingte Abweichung wieder im Optimum liegt. Das heißt, bei einer saisonbedingten Vergrößerung der Fallhöhe H wird der Strahlkreisdurchmesser $d_1$ wegen der höheren Austrittsgeschwindigkeit auf einen größeren Wert $d_{1max}$ mit passender Umfangsgeschwindigkeit korrigiert, um weiter im Optimum fahren zu können; und umgekehrt erfolgt bei einer saisonbedingten verkleinerten Fallhöhe eine Verkleinerung auf einen Strahlkreisdurchmesser $d_{1im}$.

Konstruktiv wird die Verstellbarkeit so gelöst, dass sich einerseits die Düse als festsetzbares erstes Kugelgelenk mit einer kugelförmigen Außenkontur in einem kegelförmigen Trichter der starren Elemente der Turbine abstützt, wobei diese Elemente ein Gehäusering oder ein Spritzring, wie er in der WO2006/066691 beschrieben ist, sein können, und dass andererseits die Zufuhrleitung selbst ein zweites festsetzbares Kugelgelenk bildet.

Die Verbindungsgerade der Mittelpunkte $M_1$ und $M_2$ in der Ansicht aus x- und y-Richtung ist die gedachte Schwenkachse. Je mehr die Mittelpunkte $M_1$, $M_2$ dieser beiden Kugelgelenke mit ihrer Verbindungsgeraden zur Laufradachse parallel sind, desto exakter erfolgt die Verstellung des Freistrahls in der Laufradebene. Muss konstruktiv eine Abweichung in x-Richtung vorgenommen werden, kann diese durch eine Korrektur in y-Richtung wieder ausgeglichen werden.

Die Kugelgelenke werden jeweils durch Zuganker zwischen gegenüberliegenden Flanschen festgesetzt. Dabei sind für das erste Kugelgelenk an der Düse keine Dichtungselemente notwendig, während das zweite Kugelgelenk in der Zuführleitung Dichtungselemente an der Kugelfläche benötigt, die allen Betriebsbedingungen standhalten müssen.

Um eine saisonbedingte Verstellung, die beispielsweise bei 2° liegt, vorzunehmen, können zum Beispiel Abstützelemente für die Zufuhrleitungen in einem Abstand c zur gemeinsamen Schwenkachse der beiden Kugelgelenke vorgesehen werden, die durch unterschiedliches Unterlegen der Auflage zu einer vorgesehenen Winkelverstellung $\varepsilon$ des Freistrahls führen. Eine Fixierung an den Auflagepunkten ist auch sinnvoll, um Kräfte von der Strahlumlenkung sowie durch den Freistrahl bedingte Rückstoßkräfte, mit aufzunehmen und die Kugelgelenke zu entlasten.

Im Folgenden wird die Erfindung anhand von Ausführungsbeispielen dargestellt. Es zeigen:

Fig. 1 schematisch einen Längsschnitt durch ein erfindungsgemäßes Zulaufsystem,

Fig. 2 schematisch einen Querschnitt der Figur 1 auf der Höhe der Lauf- radebene,

Fig. 3 schematisch einen Querschnitt der Figur 1 auf Höhe des Eintritts in die Zulaufleitungen,

Fig. 4 schematisch einen vergrößerten Ausschnitt aus Figur 1 mit einem in das Verteilrohr hinein stehenden Rohrbogen einer Zulaufleitung,

Fig. 5 schematisch ein Verteilrohr, bei welchem die Zulaufrohre durch die Mantelfläche hineinragen,

Fig. 6 schematisch und stark vergrößert einen Ausschnitt von dem Ab- schlussboden eines Verteilrohres, in das ein Zulaufrohr hineinragt, welches Maßnahmen zur "Auffütterung" der Grenzschicht im Be- reich des Einlaufs zeigt,

Fig. 7 schematisch die geometrischen Verhältnisse in dem Querschnitt eines Verteilrohres mit drei bzw. sechs Zulaufleitungen in Form von hineinragenden Rohrbogen,

Fig. 8 schematisch den Einbau eines Sandabscheiders in einem Verteil- rohr mit konischer Erweiterung für horizontale Peltonturbinen,

Fig. 9 schematisch einen Schnitt in der Laufradebene, der die Verände- rung des Strahlkreisdurchmessers sichtbar macht,

Fig. 10 schematisch eine Ansicht von Figur 9 in Richtung X und vergrößert ein erstes und zweites festsetzbares Kugelgelenk, und

Fig. 11 schematisch die Wirkungsgradkennlinien einer Peltonturbine in Abhängigkeit von der Fallhöhe H bei zwei verschiedenen Strahlkreisdurchmessern.

In den Figuren sind gleiche Hinweiszeichen für gleiche Funktionen verwendet worden.

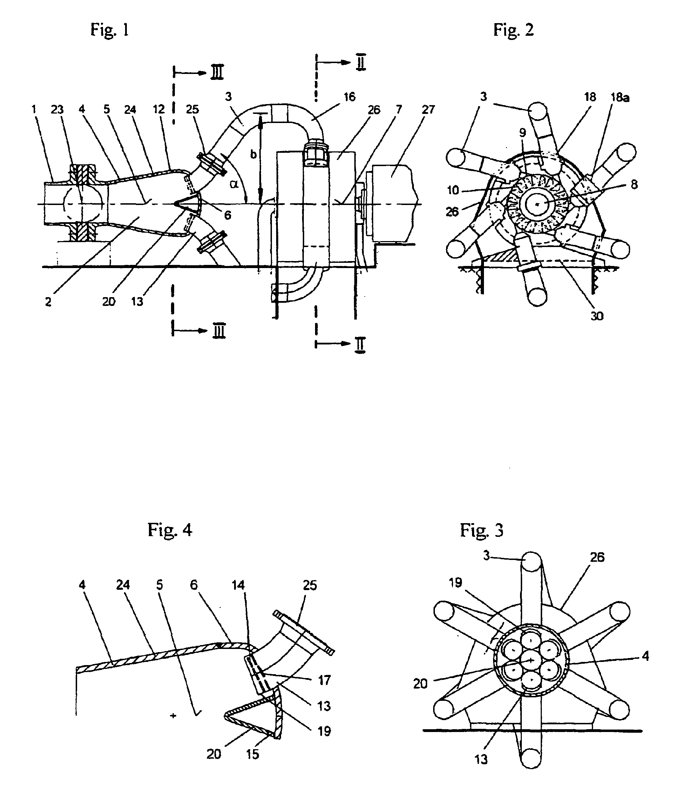

In den Figuren 1, 2, 3 und 4 ist eine horizontale Peltonturbine mit sechs Düsen 18, 18a, mit einem zugehörigen Zulaufsystem und mit einem Generator 27 gezeigt. Eine Düse 18a ist größer und länger gezeichnet als die anderen, da sie eine regelbare Nadeldüse sein soll, während die anderen fünf Düsen nur integrierte Absperrorgane aufweisen. Die Düsen 18, 18a sind an einem Stützring befestigt und ausgerichtet, welcher gleichzeitig Spritzwasser seitlich ableitet und über einen Fuß 30 an einem Fundament oder Grundrahmen abgestützt ist. Dies ermöglicht es, das Gehäuse 26 relativ leicht aus mehreren Teilen zu bauen, wenn das Laufrad 8, welches die Becher 10 trägt, mit seinen Lagern ebenfalls direkt am Fundament oder an einem Grundrahmen abgestützt ist.

Das Wasser strömt aus einer Druckleitung 1, durch eine integriertes Absperrorgan 23 und gelangt in das Zentrale Verteilrohr 4, welches über eine konische Erweiterung 24 in einen Abschlussboden 6 übergeht, der einem Klöpperboden aus dem Kesselbau entspricht. Die Achse 5 des Zentralen Verteilrohrs 4 und die Achse 7 der Peltonturbine fluchten. Die Düsen 18, 18a sind gleichmäßig über den Umfang des Laufrades verteilt. Ebenso sind die Zulaufleitungen 3 gleichmäßig um die Achse 5 verteilt, sodass sie durch Drehung um die Achse 5 auseinander hervorgehen. Die Zulaufleiturigen 3 gehen in einem Winkel $\alpha$ von dem Verteilrohr 4 weg, gehen in einem Abstand b in die Horizontale über und über einen 90° Düsenkrümmer 16 mit beschleunigter Strömung in die Laufradebene zu den Düsen, welche jeweils einen Freistrahl 9 erzeugen. Die Zulaufleitungen 3 sind durch Flanschverbindungen 25 unterbrochen und ragen jeweils mit einem Rohrbogen 13 in das Zentrale Verteilrohr 4 hinein, wobei der Rohrbogen 13 eine Krümmung aufweist, als ob er parallel zur Achse 5 entgegen der Strömung einmünden wolle.

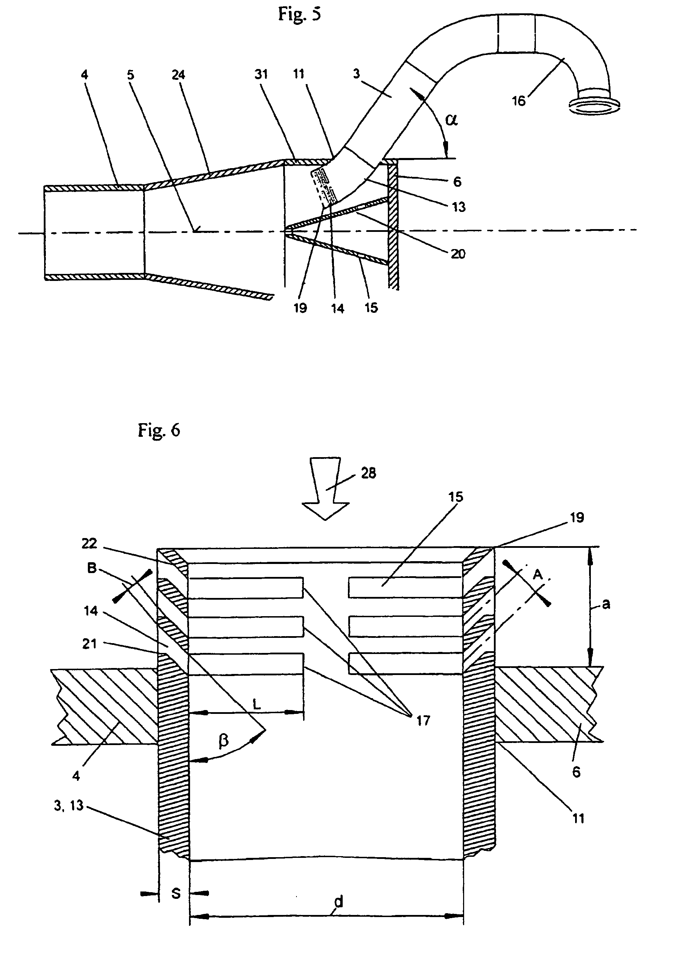

Zwischen den einmündenden Rohrstücken und gegenüber diesen gegen die Strömungsrichtung vorgelagert, ist ein kegelförmiger Verdrängerkörper 20 angebracht. Die Rohrbogen 13 sind in Durchbrüchen 11 des Abschlussbodens 6 eingeschweißt und ragen mit einem Vorsprung 19 in das Zentrale Verteilrohr hinein. Innerhalb des Vorsprungs sind zwei Reihen mit über den Umfang verteilten Querschlitzen 14 angebracht, auf deren Geometrie in der Beschreibung von Figur 6 eingegangen wird.

Figur 5 entspricht der Darstellung eines Zentralen Verteilrohres 4 wie in Figur 1. Im Unterschied zu Figur 1 schließt an die konische Erweiterung 24 ein weiteres zylindrisches Rohrstück 31 an, in dessen Mantelfläche Durchbrüche 11 für die Zulaufleitungen 3 sind, welche ebenfalls mit einem eingeschweißten Rohrbogen 13 einen Vorsprung 19 bilden. Es sind drei Reihen mit über dem Umfang verteilten Querschlitzen 14 angebracht. Der über den Einlauf der Zulaufrohre 3 mittig vorstehende Verdrängerkörper 20 ist kegelförmig. Sein Querschnitt kann kreisförmig sein. Er kann aber ebensogut aus konkaven Mantelflächen zusammengesetzt sein, um sich besser an die benachbarten Rohrbogen 13 anzugleichen.

In Figur 6 sind Maßnahmen zur Verbesserung der Strömung 28 am Einlauf in eine Zulieferleitung 3 dargestellt. Die Zulieferleitung 3 steht mit einem Vorsprung 19 in einem Abstand a in das Zentrale Verteilrohr 4 hinein, wobei es in den Abschlussboden 6 eingeschweißt ist. Es besitzt einen Innendurchmesser d und eine Wandstärke S. Im Vorsprung 19 sind über den Umfang verteilte Querschlitze 14 in drei Reihen 17 angebracht, wobei bei benachbarten Reihen 17 die Querschlitze 14, senkrecht zur Neigung 22 gemessen, einen Mittenabstand A in der Größenordnung der Wandstärke S aufweisen. Die Querschlitze haben eine Länge L, die ein Mehrfaches der Schlitzbreite B beträgt. Die Schlitzbreite B ist kleiner als die Wandstärke S um die Strömung im Schlitz etwas zu führen. Die Schlitze sind unter einem Neigungswinkel $\beta$ von etwa 45° schräg nach Innen angebracht und stehen übereinander, damit die dazwischen liegenden Wände ein Strömungsgitter bilden. Auf der äußeren Eintrittseite sind die Wände zwischen den Schlitzen symmetrisch zur Neigung 22 mit einer Anschärfung 21 versehen und verrundet. Die Einlaufkante der Zulieferleitung ist ebenfalls in einer Neigung 22 nach Innen angeschrägt.

Die Figur 7 wurde schon im allgemeinen Teil oben besprochen. Es ist am Beispiel für n=3 bzw. n=6 Zulaufleitungen geometrisch- und formelmäßig dargestellt, wie die Ausnutzung des Zentralen Verteilrohrs ist. Der Winkel y, dessen cosinus dem Verhältnis $r/(R_2-r)$ entspricht, beträgt:

$$\gamma=90° - 360°/2n = 30° \text{ bzw. } 60°$$

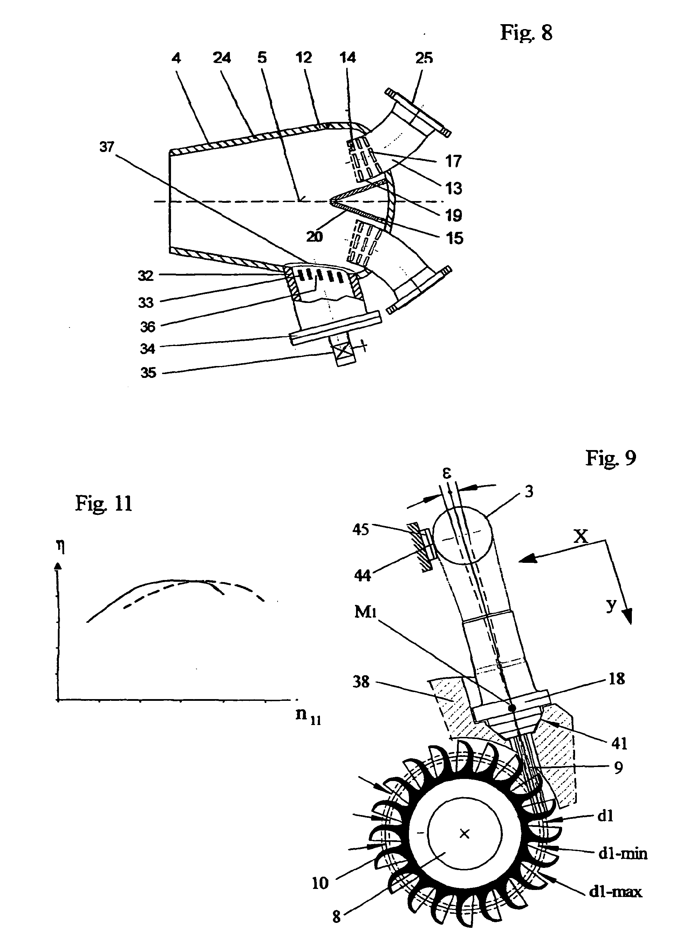

In Figur 8 ist ein zentrales Verteilrohr 4 wie im Beispiel von Figur 1 gezeigt. In der Mantelfläche 12 der konischen Erweiterung 24 ist annähernd am tiefsten Punkt ein Blindrohr 32 eingeschweißt um Sandpartikel, welche am Boden entlang mitgeschleppt werden, mit Hilfe der Schwerkraft abzufangen. Dazu bildet das Blindrohr 32 mit einem Abschlussflansch 34 einen geschlossenen Sack, in welchen die Sandpartikel abgeschieden werden. Damit durch die vorbeifließende Strömung kein Wirbel in dem Sack entsteht, welcher Sandpartikel auch wieder ausschwemmen könnte, ist die Öffnung 37 zu der Mantelfläche 12 mit einem quer zur Strömung orientierten Rechen 33 versehen. Wesentlich an diesem Rechen 33 sind quer zur Strömung stehende Längsprofile, welche Schlitze 36 mit stehendem Wasser bilden, in welche die Sandpartikel absinken können. Die Aufteilung des Querschnitts des Blindrohrs 32 in diesem Bereich in Querschlitze 36 bewirkt, dass statt eines großen Wirbels im Blindrohr höchstens noch Ansätze von kleinen Wirbeln innerhalb der einzelnen Schlitze entstehen können.

Im Anschlussflansch 34 ist ein Kugelhahn 35 eingebaut, welcher sporadisch geöffnet wird, um den angesammelten Sand zusammen mit Wasser auszuschwemmen.

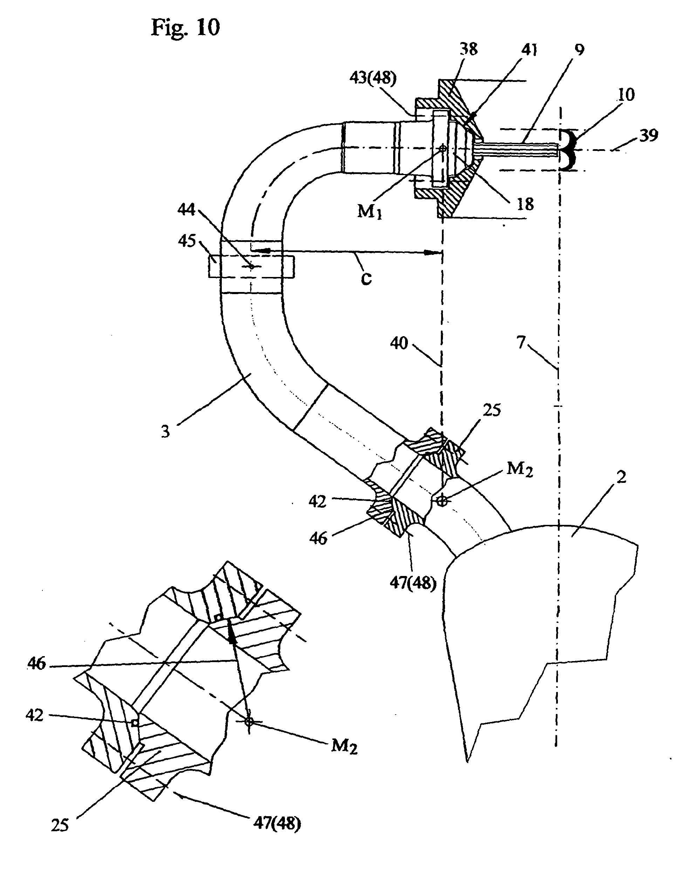

In den Figuren 9 und 10 ist eine Zulaufleitung 3 mit einer Düse 18 gezeigt, welche einen Freistrahl 9 auf einem Strahlkreisdurchmesser $d_1$ tangential auf die Becher 10 eines Laufrades 8 spritzt. Die Düse 18 besitzt eine kugelförmige Außenfläche, mit der sie sich auf einer kegelförmigen Innenfläche eines Gehäuserings 38 abstützt und so ein erstes Kugelgelenk 41 mit Mittelpunkt $M_1$ bildet. Die Düse 18 ist außen zu einem Flansch erweitert, der über Zuganker 43 zum Gehäusering 38 fixiert ist und die Düse in einer vorgegebenen Position hält. Gleichzeitig werden hier auch Kräfte aufgenommen, die durch die Umlenkung des Wassers in der Zulaufleitung 3 und der Rückstoßkraft des Freistrahles 9 entstehen.

Ein zweites Kugelgelenk 46 in einer Flanschverbindung 25 der Zufuhrleitung 3 ist mit seinem Mittelpunkt $M_2$ so angeordnet, dass eine Verbindungsgerade vom Mittelpunkt $M_2$ zum Mittelpunkt $M_1$ des ersten Kugelgelenks 41 eine Schwenkachse 40 bildet, welche parallel oder annähernd parallel zur Laufradachse 7 orientiert ist, um den Freistrahl 9 möglichst in der Laufradebene 39 zu halten. Das heißt, die Leitungsführung der Zulaufleitung 3 ist so, dass eine entsprechende Schwenkachse 40 möglich ist. Die Zulaufleitung 3 liegt an einem Abstützpunkt 44 auf, welcher in einem Abstand c zur Verbindungsgeraden 40 angebracht ist. Die Flanschverbindung 25 für das Kugelgelenk 46 wird ebenfalls über Zuganker 47 zusammengehalten, welche die relativ kleinen Winkeländerungen mit kugelförmigen Abstützflächen und entsprechenden Gegenflächen in Unterlegscheiben 48 ausgleichen. Im zweiten Kugelgelenk 46 ist zwischen kugelförmigen Verstellflächen eine Dichtung 42 angebracht, die bei verspannten Flanschen 25 Druckstöße der Zulaufleitung aufnimmt.

Zur Verstellung des Strahlkreisdurchmessers $d_1$, beispielsweise um 2°, werden die Verbindungen der Zuganker 43, 47 gelockert und die Unterlage 45 am Abstützpunkt 44 wird entsprechend dem Abstand c so verändert, dass die Winkeländerung 2° entsteht, bei der die Zuganker wieder angezogen werden. Die Zuganker 47 bei der Flanschverbindung 25 können Gewindebolzen und Muttern sein, die mit kugelförmigen Auflageflächen auf kugelförmigen Gegenflächen von Unterlegscheiben 48 aufliegen. Die Durchgangslöcher für die Gewindebolzen ermöglichen die vorgesehene Schrägstellung. Ebenso ist der Abstand zwischen den eigentlichen Flanschen so groß, dass eine Schwenkung um den vorgesehenen Winkel ε möglich ist. Eine Winkelverstellung von bis plus/minus 4° aus einer Nullstellung, in der die Flansche parallel zueinander liegen, lässt sich durch die Reibung der Unterlegscheiben 48 auf den Flanschen auffangen. Da die Zuganker 47, 43 über den Umfang der Flansche verteilt sind, ergeben sich mit der Schwenkung über den Umfang der Flansche verschiedene Abstände in denen ein Festsetzen des Kugelgelenks erfolgt.

In Figur 9 ist am Strahlkreisdurchmesser $d_1$ aufgezeigt, wie eine Schwenkung um einen Winkel plus/minus ε zu einer Verkleinerung $d_{1min}$ respektive zu einer Vergrößerung $d_{1max}$ des Strahlkreisdurchmessers führt. In Figur 11 ist für eine bestimmte Auslegung eine Wirkungsgradkennlinie η in Abhängigkeit von der Fallhöhe H gezeigt. Im optimalen Betriebspunkt bestimmt die Fallhöhe H die Austrittsgeschwindigkeit des Freistrahls und am Strahlkreisdurchmesser die Umfangsgeschwindigkeit des Laufrades für eine vorgegebene Drehzahl. Verkleinert sich der Zulaufdruck (Fallhöhe H), so muss für eine optimale Ausnutzung entweder eine kleinere Drehzahl in Kauf genommen werden, was bei einem synchron angetriebenen Generator nicht sinnvoll ist, oder der Strahlkreisdurchmesser muss auf einen kleineren Wert $d_{1min}$ verkleinert werden, welcher bei gleicher Drehzahl der passenden Umfangsgeschwindigkeit entspricht. Umgekehrt verschiebt man die Wirkungsgradkennlinie mit einem größeren Strahlkreisdurchmesser $d_{1max}$ nach rechts (strichlierte Linie), wenn die saisonbedingte Zulaufhöhe H größer ist.

Teileliste

| | |
|---|---|
| 1 | Druckrohr |
| 2 | Verteilelement (Verteilrohr) |
| 3 | Zulaufleitung |
| 4 | zentrales Verteilrohr |
| 5 | Achse |
| 6 | Abschlussboden |
| 7 | Achse |
| 8 | Laufrad |
| 9 | Freistrahl |
| 10 | Becher |

| 11 | Durchbruch |
|---|---|
| 12 | Mantelfläche |
| 13 | Rohrbogen |
| 14 | Querschlitz |
| 15 | Öffnungen |
| 16 | Düsenkrümmer |
| 17 | Reihe |
| 18 | Düse mit Absperrorgan |
| 18a | Düse mit Mengenregelung |
| 19 | Vorsprung |
| 20 | Verdrängungskörper |
| 21 | Anschärfung |
| 22 | Neigung |
| 23 | Absperrorgan |
| 24 | Konische Erweiterung |
| 25 | Flanschverbindung |
| 26 | Gehäuse |
| 27 | Generator |
| 28 | Einlaufrichtung |
| 29 | Stützring |
| 30 | Fuß |
| 31 | zylindrisches Rohrstück |
| 32 | Sandabscheider, Blindrohr |
| 33 | Rechen |
| 34 | Abschlussflansch |
| 35 | Spüleinrichtung, Kugelhahn |
| 36 | Schlitz |
| 37 | Öffnung |
| 38 | Gehäusering |
| 39 | Laufradebene |
| 40 | Verbindungsgerade, Schwenkachse |
| 41 | erstes Kugelgelenk |
| 42 | Dichtung |
| 43 | Zuganker |
| 44 | Abstützpunkt |
| 45 | Unterlage |
| 46 | zweites Kugelgelenk |
| 47 | Zuganker |
| 48 | Unterlegscheibe |

| A | Abstand |
|---|---|
| B | Schlitzbreite |
| L | Schlitzlänge |
| S | Wandstärke |
| a | Abstand Vorsprung |
| b | Abstand Umlenkbogen |
| c | Abstand |

| $D_1$ | Durchmesser Druckrohr |
|---|---|
| $d_1$ | Strahlkreisdurchmesser |
| $d_{1max}$ | größerer Strahlkreisdurchmesser |
| $d_{1min}$ | kleinerer Strahlkreisdurchmesser |
| $D_2$ | Durchmesser Verteilrohr |
| $D_3$ | Durchmesser Zuleitung |
| $M_1$ | Mittelpunkt |
| $M_2$ | Mittelpunkt |
| $R_1$ | Radius Druckrohr |
| $R_2$ | Radius Verteilrohr |

α       Winkel
β       Neigungswinkel
γ       Winkel
ε       Schwenkwinkel
η       Wirkungsgradkennlinie

**Patentansprüche**

1.  Peltonturbine mit einem Zulaufsystem für drei bis sechs Düsen, welches ein Druckrohr (1) mit einem Verteilelement (2) aufweist, von welchem Zulaufleitungen (3) zu den einzelnen Düsen (18, 18a) abzweigen, welche mit einem Freistrahl (9) auf die Becher (10) eines Laufrades (8) spritzen, wobei das Verteilelement aus einem zentralen Verteilrohr (4) mit kreisförmigen Querschnitten, mit Achse (5) und mit Abschlussboden (6) besteht, und die Zulaufleitungen (3) in Achsrichtung gesehen über den Umfang des Verteilrohrs verteilt jeweils in tangentialer und/oder in radialer Richtung nach außen wegführen, **dadurch gekennzeichnet, dass** die Zulaufleitungen entgegen der Strömungsrichtung im Verteilrohr mit einem Vorsprung (19) in einem Abstand a, welcher mindestens 15% des Rohrdurchmessers d der Zulaufleitung (3) entspricht, in das Verteilrohr (4) hineinragen.

2.  Peltonturbine mit Zulaufsystem nach Anspruch 1, **dadurch gekennzeichnet, dass** die Zulaufleitungen (3) mit Vorsprüngen (19) in Form eines Rohrbogens (13) in das Verteilrohr (4) hineinragen, welcher entgegen der Strömung in der Richtung der Achse (5) des Verteilrohrs gekrümmt ist.

3.  Peltonturbine mit Zulaufsystem nach Anspruch 1 oder 2, **dadurch gekennzeichnet, dass** die Vorsprünge (19) mindestens eine Reihe (17) mit Öffnungen (15) oder Querschlitzen (14) aufweisen die auf einer Umfangslinie liegen und mehr als 50% der Umfangslinie, vorzugsweise zwischen 60% und 80% einnehmen.

4.  Peltonturbine mit Zulaufsystem nach Anspruch 3, **dadurch gekennzeichnet, dass** Öffnungen (15) oder Schlitze (14) eine Neigung zur Mantellinie in Längsrichtung von einem Winkel β von 30° bis 60°, vorzugsweise von 45° aufweisen.

5.  Peltonturbine mit einem Zulaufsystem nach einem der Ansprüche 3 oder 4, **dadurch gekennzeichnet, dass** die Öffnungen (15) oder Schlitze (14), quer zur Neigung gemessen eine Breite B von 30% bis 60%, vorzugsweise von 50% der Rohrwandstärke S der Zulaufleitung (3) aufweisen.

6.  Peltonturbine mit Zulaufsystem nach einem der Ansprüche 3 bis 5, **dadurch gekennzeichnet, dass** in Längsrichtung mindestens zwei Reihen (17) mit Öffnungen oder Schlitzen hintereinander liegen, wobei der Abstand A zwischen den Reihen in etwa der Wandstärke S der Zulaufleitung entspricht.

7.  Peltonturbine mit Zulaufsystem nach einem der Ansprüche 1 bis 6, **dadurch gekennzeichnet, dass** das zentrale Verteilrohr (4) sich konisch zum Abschlussboden (6) hin erweitert.

8.  Peltonturbine mit Zulaufsystem nach einem der Ansprüche 1 bis 7, **dadurch gekennzeichnet, dass** die Achse (5) des zentralen Verteilrohrs (4) mit einer Achse (7) des Laufrades (8) fluchtet.

9.  Peltonturbine mit Zulaufsystem nach Anspruch 1 bis 8, **dadurch gekennzeichnet, dass** Durchbrüche (11) für die Zulaufleitungen (3) in dem Abschlussboden (6) vorgesehen sind.

10. Peltonturbine mit Zulaufsystem nach Anspruch 1 bis 8, **dadurch gekennzeichnet, dass** Durchbrüche (11) für die Zulaufleitungen in der Mantelfläche (12) des zentralen Verteilrohrs (4) vorgesehen sind.

11. Peltonturbine mit Zulaufsystem nach Anspruch 1 bis 10, **dadurch gekennzeichnet, dass** die Zulaufleitungen (3) relativ zur Achse (5) des zentralen Verteilrohrs (4) in einem Winkel 90° >α>0° aus dem Verteilrohr oder Abschlussboden in Richtung Laufrad (8) austreten.

12. Peltonturbine mit Zulaufsystem nach Anspruch 11, **dadurch gekennzeichnet, dass** der Winkel α zwischen 70° und 20° liegt.

13. Peltonturbine mit Zulaufsystem nach einem der vorhergehenden Ansprüche, **dadurch gekennzeichnet, dass** die Zulaufleitungen (3) durch Drehung um die Achse (5) des zentralen Verteilrohrs (4) auseinander hervorgehen.

14. Peltonturbine mit Zulaufsystem nach einem der vorangehenden Ansprüche, **dadurch gekennzeichnet, dass** die Zulaufleitungen (3) von dem zentralen Verteilrohr (4) weg auf einen größeren Abstand b führen und in einem Düsenkrümmer (16), der im Querschnitt abnimmt und die Strömung beschleunigt, in die Mittelebene des Laufrades einschwenken.

15. Peltonturbine mit Zulaufsystem nach einem der vorangehenden Ansprüche, **dadurch gekennzeichnet, dass** die Zulaufleitungen (3) in gleichen Abständen über den Umfang des zentralen Verteilrohrs (4) verteilt sind.

16. Peltonturbine mit Zulaufsystem nach einem der vorangehenden Ansprüche, **dadurch gekennzeichnet, dass** den Zulaufleitungen (3) im zentralen Verteilrohr (4) mittig angeordnet ein kegelförmiger Verdrängerkörper (20) vorgelagert ist.

17. Peltonturbine mit Zulaufsystem nach einem der vorangehenden Ansprüche, **dadurch gekennzeichnet, dass** am Austritt aus dem zentralen Verteilrohr (4) die Summe der Querschnitte der Zulaufrohre (3) dem Querschnitt des Druckrohrs (1) entspricht.

18. Peltonturbine mit Zulaufsystem nach einem der vorangehenden Ansprüche, **dadurch gekennzeichnet, dass** für eine horizontale Anordnung vor dem Übergang des zentralen Verteilrohrs (4) in die Zulaufleitungen (3) im untersten Bereich der Mantelfläche (12) des Verteilrohrs eine Öffnung (37) zu einem Sandabscheider (32) besteht.

19. Peltonturbine mit Zulaufsystem nach Anspruch 18, **dadurch gekennzeichnet, dass** in der Öffnung (37) ein Rechen (33) mit quer zur Strömungsrichtung angeordneten Längsprofilen und Schlitzen (36) eingebaut ist.

20. Peltonturbine nach einem der Ansprüche 1 bis 19, **dadurch gekennzeichnet, dass** sich einerseits die Düsen (18) auf einem Gehäusering (38) mit einem ersten festsetzbaren Kugelgelenk (41) mit Mittelpunkt $M_1$ abstürzen, und dass andererseits die Zufuhrleitung (3) jeweils eine Flanschverbindung (25) mit einem zweiten Kugelgelenk (46) mit Mittelpunkt $M_2$ aufweist, wobei eine Verbindungsgerade (40) zwischen den Mittelpunkten $M_1$, $M_2$ eine Schwenkachse für das Rohrstück zwischen Düse (18) und Flanschverbindung (25) bildet und die Schwenkachse (40) zur Laufradachse (7) parallel oder annähernd parallel angeordnet ist, um eine Schwenkung des Freistrahls (9) in der Laufradebene (39) um einen Winkel ε von plus/ minus 4° vorzunehmen.

21. Peltonturbine nach Anspruch 20, **dadurch gekennzeichnet, dass** die Rohrstücke zwischen dem ersten und zweiten Kugelgelenk (41, 46) einen Abstützpunkt (44) in einem Abstand c zur Schwenkachse (40) aufweisen, um durch unterschiedliche Unterlagen (45) eine Verstellung des Freistrahls (9) um einen vorbestimmten Schwenkwinkel ε einstellbar zu machen.

**Claims**

1. A Pelton turbine having an inflow system for three to six nozzles, said inflow system having a pressure pipe (1) with a distribution element (2) from which inflow lines (3) branch off to the individual nozzles (18, 18a) which spray an open jet (9) onto the cups (10) of a rotor (8), wherein the distribution element comprises a central distribution pipe (4) with circular cross-sections, with an axis (5) and with a terminal base (6); and wherein, when viewed in the direction of the axis, the inflow lines (3) are distributed over the periphery of the distribution pipe and each lead away outwardly in the tangential direction and/or in the radial direction, **characterized in that** the inflow lines have a projection (19) projecting into the distribution pipe (4) against the flow direction in the distribution pipe at a spacing a, which corresponds to at least 15% of the pipe diameter d of the inflow line (3).

2. A Pelton turbine having an inflow system in accordance with claim 1, **characterized in that** the inflow lines (3) have projections (19) in the form of a pipe bend (13) projecting into the distribution pipe (4) which is curved against the flow in the direction of the axis (5) of the distribution pipe.

3. A Pelton turbine having an inflow system in accordance with claim 1 or claim 2, **characterized in that that** the projections (19) have at least one row (17) with openings (15) or transverse slits (14) which are disposed on a peripheral line and take up more than 50% of the peripheral line, preferably between 60% and 80%.

4. A Pelton turbine having an inflow system in accordance with claim 3, **characterized in that** openings (15) or slits (14) have an inclination to the jacket line in the longitudinal direction of an angle β from 30° to 60°, preferably of 45°.

5. A Pelton turbine having an inflow system in accordance with one of the claims 3 or 4, **characterized in that** the openings (15) or slits (14), measured transversely to the inclination, have a width B of 30% to 60%, preferably of 50%, of the wall thickness S of the inflow line (3).

6. A Pelton turbine having an inflow system in accordance with any one of the claims 3 to 5, **characterized in that** at least two rows (17) having openings or slits are disposed behind one another in the longitudinal direction, with the spacing A between the rows approximately corresponding to the pipe wall thickness S of the inflow line.

7. A Pelton turbine having an inflow system in accordance with any one of the claims 1 to 6, **characterized in that** the central distribution pipe (4) extends conically toward the terminal base (6).

8. A Pelton turbine having an inflow system in accordance with any one of the claims 1 to 7, **characterized in that** the axis (5) of the central distribution pipe (4) coincides with an axis (7) of the rotor (8).

9. A Pelton turbine having an inflow system in accordance with any one of the claims 1 to 8, **characterized in that** openings (11) are provided in the terminal base (6) for the inflow lines (3).

10. A Pelton turbine having an inflow system in accordance with any one of the claims 1 to 8, **characterized in that** openings (11) are provided in the jacket surface (12) of the central distribution pipe (4) for the inflow lines.

11. A Pelton turbine having an inflow system in accordance with any one of the claims 1 to 10, **characterized in that** the inflow lines (3) exit the distribution pipe or the terminal base in the direction of the rotor (8) at an angle 90° > $\alpha$>0 relative to the axis (5) of the central distribution pipe (4).

12. A Pelton turbine having an inflow system in accordance with claim 11, **characterized in that** the angle $\alpha$ is between 70° and 20°.

13. A Pelton turbine having an inflow system in accordance with any one of the preceding claims, **characterized in that** the inflow lines (3) come out from one another by rotation about the axis (5) of the central distribution pipe (4).

14. A Pelton turbine having an inflow system in accordance with any one of the preceding claims, **characterized in that** the inflow lines (3) lead away from the central distribution pipe (4) to a larger spacing b and pivot into the central plane of the rotor in a nozzle elbow (16) which reduces in cross-section and accelerates the flow.

15. A Pelton turbine having an inflow system in accordance with any one of the preceding claims, **characterized in that** the inflow lines (3) are distributed at equal intervals over the periphery of the central distribution pipe (4).

16. A Pelton turbine having an inflow system in accordance with any one of the preceding claims, **characterized in that** a conical displacement body (20) is supported, arranged centrally, before the inflow lines (3) in the central distribution pipe (4).

17. A Pelton turbine having an inflow system in accordance with any one of the preceding claims, **characterized in that** the sum of the cross-sections of the inflow pipes (3) corresponds to the cross-section of the pressure pipe (1) at the outlet from the central distribution pipe (4).

18. A Pelton turbine having an inflow system in accordance with any one of the preceding claims, **characterized in that** there is an opening (37) to a sand separator (32) in the bottommost region of the jacket surface (12) of the distribution pipe for a horizontal arrangement before the transition of the central distribution pipe (4) into the inflow lines (3).

19. A Pelton turbine having an inflow system in accordance with claim 18, **characterized in that** a rake (33) having longitudinal sections and slits (36) arranged transversely to the direction of flow is installed in the opening (37).

20. A Pelton turbine in accordance with any one of the claims 1 to 19, **characterized in that**, on the one hand, the nozzles (18) are supported at a housing ring (38) with a first fixable ball joint (41) with a center $M_1$; and **in that**, on the other hand, the supply line (3) respectively has a flange connection (25) with a second ball joint (46) with a center $M_2$, with a straight connection line (40) between the centers $M_1$ and $M_2$ forming a pivot axis for the pipe piece between the nozzle (18) and the flange connection (25) and the pivot axis (40) being arranged parallel or approximately parallel to the rotor axis (7) to carry out a pivoting of the open jet (9) in the rotor plane (39) by an angle ε of plus/minus 4°.

21. A Pelton turbine in accordance with claim 20, **characterized in that** the pipe pieces have a support point (44) at a spacing c from the pivot axis (40) between the first and second ball joints (41, 46) to make an adjustment of the open jet (9) settable by a preset pivot angle ε by different underlays (45).

**Revendications**

1. Turbine Pelton avec un système d'alimentation pour trois à six buses, qui comprend un tube sous pression (1) avec un élément de répartition (2), depuis lequel des conduites d'alimentation (3) sont ramifiées vers les buses individuelles (18, 18a), lesquels projettent un jet libre (9) vers les godets (10) d'un rotor (8), dans laquelle l'élément de répartition est composé d'un tube de répartition central (4) avec section circulaire, comportant un axe (5) et un fond d'obturation (6), et les conduits d'alimentation (3) vont en s'éloignant en direction tangentielle et/ou en direction radiale respectivement vers l'extérieur, en étant répartis sur la périphérie du tube de répartition, vus en direction axiale, **caractérisée en ce que** les conduites d'alimentation pénètrent dans le tube de répartition (4) en sens contraire à la direction d'écoulement dans le tube de répartition avec une saillie (19) sur une distance a, qui correspond à au moins 15 % du diamètre d du tube du conduit d'alimentation (3).

2. Turbine Pelton avec un système d'alimentation selon la revendication 1, **caractérisée en ce que** les conduites d'alimentation (3) pénètrent dans le tube de répartition (4) avec des saillies (19) sous forme d'un arc tubulaire (13), lequel est incurvé en sens contraire à l'écoulement dans la direction de l'axe (5) du tube de répartition.

3. Turbine Pelton avec un système d'alimentation selon la revendication 1 ou 2, **caractérisée en ce que** les saillies (19) comprennent au moins une rangée (17) avec des ouvertures (15) ou des fentes transversales (14), qui sont sur une ligne périphérique et occupent plus de 50 % de la ligne périphérique, de préférence entre 60 % et 80 %.

4. Turbine Pelton avec un système d'alimentation selon la revendication 3, **caractérisée en ce que** les ouvertures (15) ou les fentes (14) présentent une inclinaison par rapport à la ligne enveloppe en direction longitudinale sous un angle β de 30° à 60°, de préférence de 45°.

5. Turbine Pelton avec un système d'alimentation selon l'une des revendications 3 ou 4, **caractérisée en ce que** les ouvertures (15) ou les fentes (14) présentent une largeur B, mesurée perpendiculairement à l'inclinaison, de 30 % à 60 %, de préférence de 50 % de l'épaisseur de paroi tubulaire S de la conduite d'alimentation (3).

6. Turbine Pelton avec un système d'alimentation selon l'une des revendications 3 à 5, **caractérisée en ce que**, en direction longitudinale, au moins deux rangées (17) avec des ouvertures ou des fentes sont disposées les unes derrière les autres, et la distance A entre les rangées correspond approximativement à l'épaisseur de paroi S de la conduite d'alimentation.

7. Turbine Pelton avec un système d'alimentation selon l'une des revendications 1 à 6, **caractérisée en ce que** le tube de répartition central (4) va en s'élargissant sous forme conique vers le fond d'obturation (6).

8. Turbine Pelton avec un système d'alimentation selon l'une des revendications 1 à 7, **caractérisée en ce que** l'axe (5) du tube de répartition central (4) est aligné avec un axe (7) du rotor (8).

9. Turbine Pelton avec un système d'alimentation selon la revendication 1 à 8, **caractérisée en ce que** des traversées (11) pour les conduites d'alimentation (3) sont prévues dans le fond d'obturation (6).

10. Turbine Pelton avec un système d'alimentation selon la revendication 1 à 8, **caractérisée en ce que** des traversées (11) pour les conduits d'alimentation sont prévues dans la surface enveloppe (12) du tube de répartition central (4).

11. Turbine Pelton avec un système d'alimentation selon la revendication 1 à 10, **caractérisée en ce que** les conduites d'alimentation (3) sortent du tube de répartition ou du fond d'obturation, sous un angle de 90° > α > 0° par rapport à l'axe (5) du tube de répartition central (4) en direction du rotor (8).

**12.** Turbine Pelton avec un système d'alimentation selon la revendication 11, **caractérisée en ce que** l'angle $\alpha$ est entre 70° et 20°.

**13.** Turbine Pelton avec un système d'alimentation selon l'une des revendications précédentes, **caractérisée en ce que** les conduites d'alimentation (3) vont s'écartant les unes des autres par rotation autour de l'axe (5) du tube de répartition central (4).

**14.** Turbine Pelton avec un système d'alimentation selon l'une des revendications précédentes, **caractérisée en ce que** les conduites d'alimentation (3) mènent, en s'éloignant du tube de répartition central (4), jusqu'à une distance b plus élevée et sont défléchies jusque dans le plan médian du rotor en un collecteur de buses (16) dont la section transversale diminue et qui accélère l'écoulement.

**15.** Turbine Pelton avec un système d'alimentation selon l'une des revendications précédentes, **caractérisée en ce que** les conduites d'alimentation (3) sont réparties à distances égales sur la périphérie du tube de répartition central (4).

**16.** Turbine Pelton avec un système d'alimentation selon l'une des revendications précédentes, **caractérisée en ce qu'**un corps de refoulement de forme conique (20) est disposé en amont des conduites d'alimentation (3) dans le tube de répartition central (4).

**17.** Turbine Pelton avec un système d'alimentation selon l'une des revendications précédentes, **caractérisée en ce que**, à la sortie du tube de répartition central (4), la somme des sections transversales des tubes d'alimentation (3) correspond à la section du tube sous pression (1).

**18.** Turbine Pelton avec un système d'alimentation selon l'une des revendications précédentes, **caractérisée en ce que**, pour un agencement horizontal avant la transition du tube de répartition central (4) vers les conduites d'alimentation (3) dans la région la plus inférieure de la surface enveloppe (12) du tube de répartition, il est prévu une ouverture (37) vers un séparateur de sable (32).

**19.** Turbine Pelton avec un système d'alimentation selon la revendication 18, **caractérisée en ce qu'**un râteau (33), avec des profilés allongés et des fentes (36) disposés perpendiculairement à la direction d'écoulement, est intégré dans l'ouverture (37).

**20.** Turbine Pelton selon l'une des revendications 1 à 19, **caractérisée en ce que** d'une part les buses (18) sont soutenues sur une bague de boîtier (38) avec une première articulation à rotule (41) susceptible d'être immobilisée et présentant un centre M1, et **en ce que** d'autre part la conduite d'alimentation (3) comporte respectivement une liaison à bride (25) avec une seconde articulation à rotule (46) présentant un centre M2, dans laquelle une droite de liaison (40) entre les centres M1, M2 constitue un axe de pivotement pour la pièce de tube entre les buses (18) et la liaison à bride (25), et l'axe de pivotement (40) est agencé parallèlement ou approximativement parallèlement à l'axe (7) du rotor, afin de procéder à un pivotement du jet libre (9) d'un angle $\varepsilon$ de plus/moins 4° dans le plan (39) du rotor.

**21.** Turbine Pelton selon la revendication 20, **caractérisée en ce que** les pièces tubulaires entre la première et la seconde articulation à rotule (41, 46) présentent un point d'appui (44) à une distance c par rapport à l'axe de pivotement (40), afin de rendre réglable, grâce à des cales différentes (45), le jet libre (5) sur un angle de pivotement prédéterminé $\varepsilon$.

Fig. 1

Fig. 2

Fig. 4

Fig. 3

Fig. 5

Fig. 6

## Fig. 7

Dreifach-Abzweiger

Sechsfach-Abzweiger

D1

D2

D3

R1 = D1/2

R2 = D2/2

r = D3/2

γ

R2 - r

$$r = \frac{R1}{\sqrt{3}}$$

$n = 3;$ $\quad \dfrac{R2}{R1} = 1.25$

$n = 6;$ $\quad \dfrac{R2}{R1} = 1.22$

**Fig. 8**

**Fig. 11**

**Fig. 9**

## Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2005012783 W
- JP 8218999 B
- DE 326404
- JP 5005478 B
- WO 2006066691 A